# EUROPEAN PATENT SPECIFICATION

(11) **EP 1 369 029 B1**
(45) Date of publication and mention of the grant of the patent: **31.05.2006**
(21) Application number: 03075777.7
(22) Date of filing: 18.03.2003
(51) Int. Cl.: A01J 5/007, A01J 5/017

(54) **A method of and a device for automatically milking an animal**
Verfahren und Vorrichtung zum automatischen Melken eines Tieres
Méthode et dispositif pour la traite automatique d'un animal

(30) Priority: 06.06.2002 NL 1020783
(43) Date of publication of application: 10.12.2003
(73) Proprietor: Lely Enterprises AG, 6300 ZUG (CH)
(72) Inventor: van den Berg, Karel, 2971 BR Bleskensgraaf (NL)
(74) Representative: Corten, Maurice Jean F.M.

(56) References cited:
- WO-A-99/35904
- DE-A- 3 609 275
- US-A- 4 280 445
- US-A- 4 292 926
- US-A- 6 009 832

## Description

The invention relates to a method of automatically milking an animal according to the preamble of claim 1.

Such a method is known from US-4,292,926. In this known method, prior to the milking, the milking intensity for the individual udder quarters is adjusted in such away that the udder quarters will be milked out as much as possible simultaneously. However, during milking, the milking intensity of the individual udder quarters is controlled with the aid of the milk flow obtained during milking in such a way that the relevant teat cup is prevented from climbing up on the teat. The disadvantage of this known method is that, due to the latter measure, the udder quarters will not be milked out at least substantially simultaneously in all cases.

The invention aims inter alia at providing a method of automatically milking an animal, which method makes it possible for the udder quarters to be milked out at least substantially simultaneously.

For this purpose, according to the invention, a method of automatically milking an animal comprises the features according to the characterizing part of claim 1. Due to the fact that the milking intensity during milking is controlled in such a way that all udder quarters will be milked out according to a predetermined chronological order, the milking can take place even more animal-friendly. In some methods of automatically milking an animal it is customary that after the milking another treatment takes place. The performance of such a post-treatment cannot always take place immediately after the milking, because for the milking of the other udder quarters there is required equipment that makes the post-treatment difficult, if not impossible. A teat of a milked out udder quarter can be post-treated only when all other udder quarters have been milked out, which may lead sometimes to a long waiting time for the post-treatment. This may lead to harmful effects for the relevant udder quarter, for example in relation to the health. By controlling the relevant components, according to the invention, in such a way that the udder quarters will be milked out according to a predetermined chronological order, the milking can optimally be attuned to the further treatments on the teats, so that the animal is milked in a friendly manner (by which is also meant a medically safe manner). It is pointed out here that a short waiting time before a teat of a milked out udder quarter is post-treated is not harmful in many cases.

A method according to the invention comprises in particular the step of controlling the milking intensity during at least a part of the milking of each udder quarter in such a way that all udder quarters will be milked out at least substantially simultaneously. It has in fact been found that in the known method, even after a certain quarter has been milked out (and the teat cup has already been disconnected), said quarter is stimulated again by milking the other quarters, in particular when the other quarters are milked considerably longer, and the quarter that has already been milked out again produces milk. Due to this, milk still remains in said quarter, which might lead to health problems for that quarter. Due to the fact that, according to this embodiment of the invention, all quarters will be milked out at least substantially simultaneously, the renewed stimulation of a milked out quarter will occur at least to a lesser extent.

The method according to the invention can in particular be applied if said method comprises the step of automatically connecting a teat cup to a teat by means of a robot arm.

Although it is possible to connect the teat cups simultaneously to the teats, for reasons of connection accuracy the teat cups are preferably connected successively to the teats. The points of time of connection are taken into account, preferably together with the expected quarter milking durations, when controlling the milking intensity in such a way that the udder quarters will be milked out according to a previously adjusted chronological order.

The milking intensity can be controlled in a simple manner in that for the milking intensity at least one milking process parameter is chosen from the group consisting of: milking vacuum, rising rate of the pulsation vacuum, rate of descent of the pulsation vacuum and release-squeeze ratio.

Because the milking vacuum may vary to some extent during milking, and the milking velocity may vary as a result thereof, in an embodiment of a method according to the invention, the method comprises the step of measuring, during the milking of an udder quarter, the milking vacuum under the teat in the teat cup, and the step of controlling the pulsation vacuum in such a way that the maximum underpressure value of the pulsation vacuum is equal to or is a fixed value lower than the measured milking vacuum.

The invention also relates to a device for automatically milking an animal having at least two udder quarters according to claim 7.

Preferred embodiments of a device according to the invention are described in the subclaims 8 to 11.

The invention will now be explained in further detail with reference to the accompanying figures, in which:
Figure 1 shows a teat cup in which a milking vacuum gauge is disposed;
Figure 2 shows schematically a device for automatically milking an animal;
Figure 3 shows schematically a common buffer vessel of the device shown in Figure 2;
Figure 4 shows schematically an individual buffer vessel of the device shown in Figure 2, and
Figure 5 shows schematically a diagram of the pulsation and milking vacuum curve.

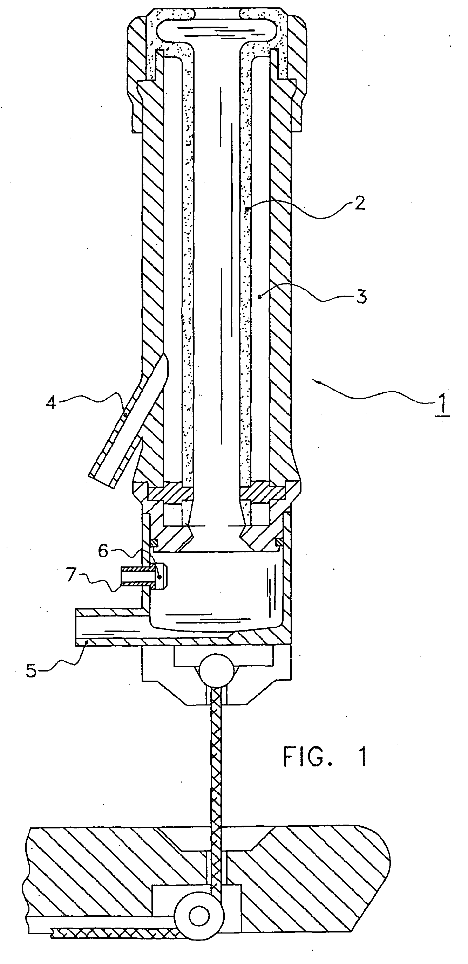

Figure 1 shows a teat cup 1 with a teat liner 2 and a pulse chamber 3. To the pulse chamber 3 there is connected, via a pulsation line 4, a (non-shown), preferably computer-controlled, adjustable pulsator. Near the lower side of the teat cup 1 there is further disposed a milk line 5. In the lower part of the teat cup 1 there is disposed a milking vacuum gauge 6. The milking vacuum gauge 6 is connected, via a line 7, to a computer or a calculating unit. With the aid of the computer and/or the calculating unit, the computer-controlled adjustable pulsator can be controlled on the basis of the signal emitted by the milking vacuum gauge 6, which signal indicates the value of the milking vacuum.

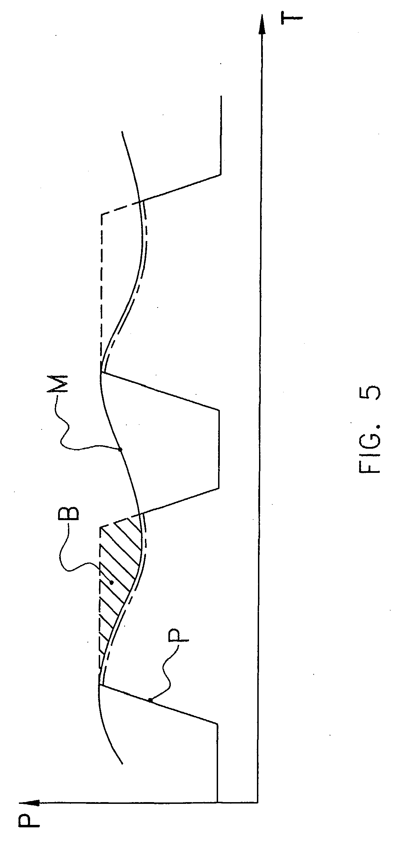

The control of the pulsator will now be explained in further detail with reference to the diagrams in Figure 5. Here the X-axis is the time axis, whereas the Y-axis indicates the underpressure of the milking vacuum and the pulsation vacuum.

Figure 5 shows the pulsation curve P indicating the pulsation vacuum generated by the pulsator for one teat. Here the part of the pulsation curve P that is represented by a broken line indicates the pulsation vacuum that is used in a previously known device for automatically milking. Figure 5 furthermore shows the milking vacuum curve M as measured by the milking vacuum gauge 6. As shown, the milking vacuum varies during milking. The pulsation vacuum also varies and may assume a maximum underpressure value.

In a previously known device for automatically milking an animal the teat of an animal is unnecessarily loaded in the shaded area B situated between the part of the pulsation curve P represented by the broken lines and the relevant part of the milking vacuum curve. This loading may lead to irritation and even inflammation of the teat.

Such a loading of the teat is prevented in that the computer and/or the calculating unit (in general a control device) uses the value of the milking vacuum measured by the milking vacuum gauge 6 for the control of the pulsator for adjusting the pulsation vacuum. Here the relevant components are controlled in such a way that the maximum underpressure value of the pulsation vacuum is equal to or is a fixed value lower than the measured milking vacuum. This is shown in Figure 5 by the dashed-dotted line belonging to the pulsation curve P.

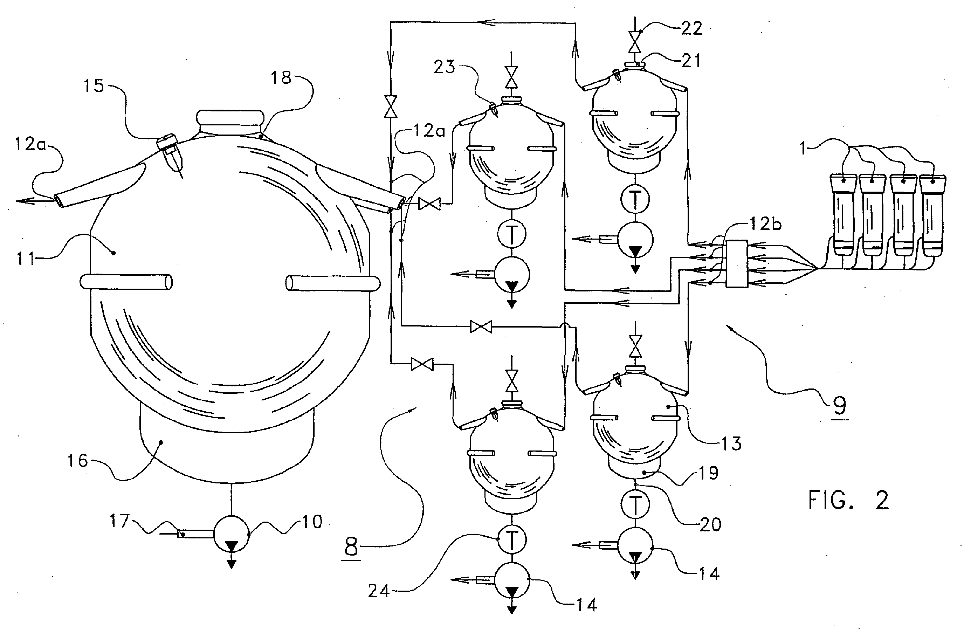

Figure 2 shows schematically a device 8 for automatically milking an animal. In said device the pulsator is not shown, because the pulsator and the control thereof are known per se, such as for example from DE-A1-3609275.

The device 8 is provided with at least two teat cups (in the embodiment shown four) to be connected to respective teats of the animal. A milking vacuum unit 9 generates the milking vacuum in the teat cups 1.

The milking vacuum unit 9 is provided with a common vacuum pump 10 and with a common buffer vessel 11 to which vacuum can be applied by means of the common vacuum pump. In the embodiment shown the common vacuum pump 10 for applying vacuum to the common buffer vessel 11 is a frequency-controlled vacuum pump. The common buffer vessel 11 comprises a vacuum sensor 15 for measuring the vacuum in the common buffer vessel 11. The vacuum in the common buffer vessel 11 can be controlled by means of the common vacuum pump 10 with the aid of data from the vacuum sensor 15. The common buffer vessel 11 has for example a content of approximately 30 dm³.

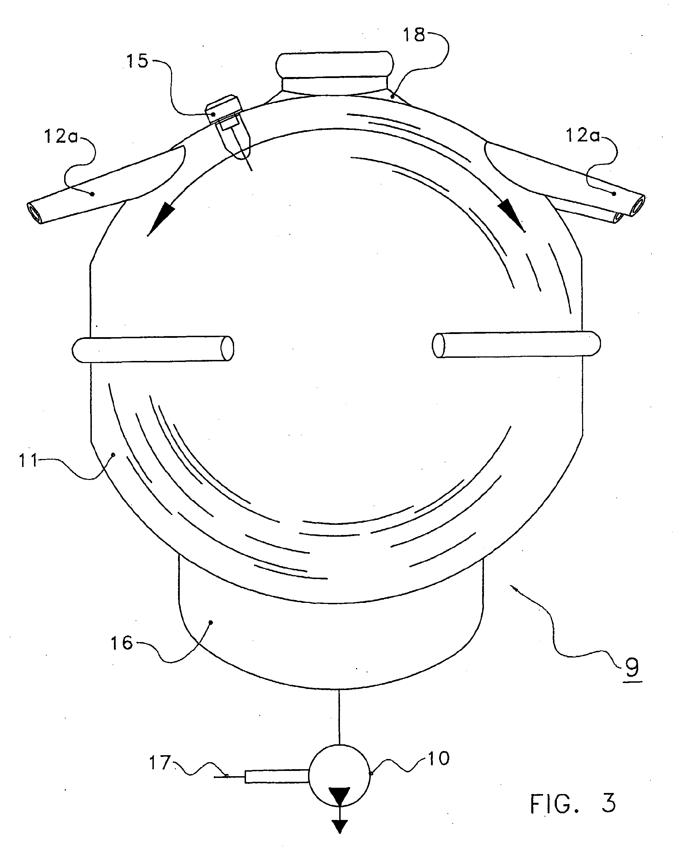

In the embodiment shown, the common buffer vessel 11 has a lower side 16 situated in the direction of the gravitational force (Figure 3). In said lower side 16 there is arranged an outlet 17 in which the common vacuum pump 10 for applying vacuum to the common buffer vessel 11 is disposed. Opposite to the direction of the gravitational force the common buffer vessel 11 has an upper side 18. Each first vacuum line portion 12a can be connected to the upper side 18 of the common buffer vessel 11.

An individual buffer vessel 13 is included in each vacuum line 12 and is positioned between the common buffer vessel 11 and the respective teat cup 1. Each individual buffer vessel 13 can be connected to the common buffer vessel 11 via a first vacuum line portion 12a and to the respective teat cup 1 via a second vacuum line portion 12b. For each individual buffer vessel 13 the device 8 comprises a respective individual milk pump 14 (with milk meter, if desired) for applying vacuum to the individual buffer vessel 13.

Due to the fact that the milking vacuum unit 9 comprises both a common vacuum pump 10 and an individual milk pump 14 per individual buffer vessel 13, it is possible to apply a milking vacuum per teat cup 1 in an accurate and reproducible way.

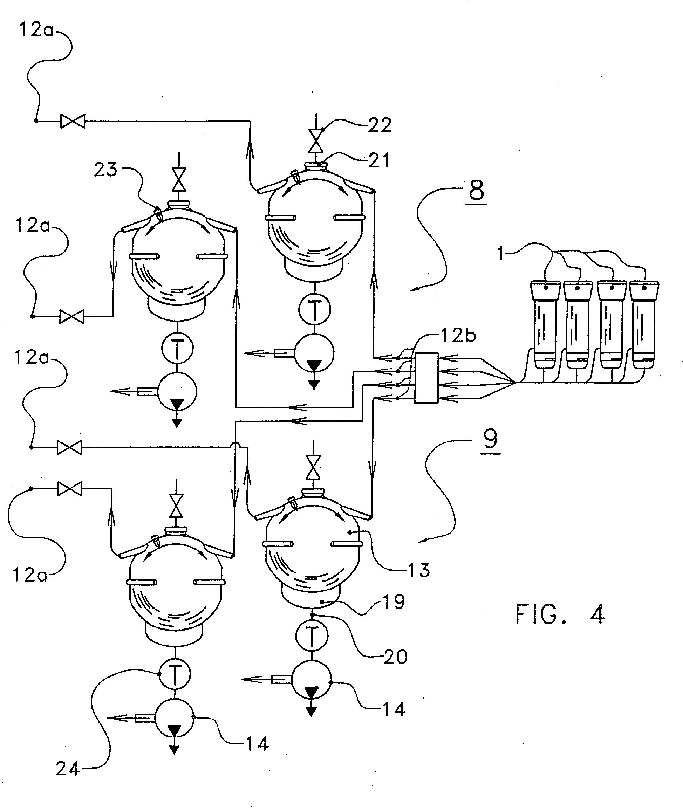

Each individual buffer vessel 13 has a lower side 19 situated in the direction of the gravitational force (Figure 4). In said lower side 19 there is arranged an outlet 20 in which the individual milk pump 14 for applying vacuum to the individual buffer vessel 13 is disposed. Opposite to the direction of the gravitational force the individual buffer vessel 13 has an upper side 21 to which the respective first vacuum line portion 12a can be connected. Furthermore the second vacuum line portion 12b can also be connected to the upper side 21 of the respective individual buffer vessel 13. In the upper side of the individual buffer vessel 13 there is also disposed an air inlet control valve 22. An individual buffer vessel 13 has for example a content of 1.5 dm³, and also serves as a milk separator.

Analogous to the common buffer vessel, each individual buffer vessel 13 is provided with a vacuum sensor 23 for measuring the vacuum in the individual buffer vessel 13. Here the individual milk pump 14 and/or the air inlet control valve 22, and thus the vacuum in the individual buffer vessel 13, can be controlled with the aid of data from the vacuum sensor 23.

In the first and second vacuum line portion there are disposed controllable valves exercising a function comparable to that of the valves in conventional vacuum line portions.

For applying an even more accurate milking vacuum, if desired, the dimensions of vacuum line portions 12a, 12b are also of importance. An in particular accurately adjustable milking vacuum is obtained if the first vacuum line portion 12a has a maximum capacity of approximately 3500 cm³/s and/or if the second vacuum line portion 12b has a maximum capacity of approximately 12000 cm³/s.

If the device comprises a milking robot known per se with a robot arm for connecting a teat cup to a teat, it is advantageous if at least one individual buffer vessel 13 is disposed on or in the robot arm.

By means of the device described it is possible to generate a very accurate milking vacuum in the teat cup under the teat. It is further possible to control, during milking, said milking vacuum as well as the pulsation vacuum and other milking process parameters, if any, by means of the control device provided with software (for example a computer and/or a calculating unit) in such a way that all udder quarters will be milked out at least substantially according to a predetermined chronological order, in particular simultaneously. Said milking process parameters determine the milking intensity.

Such a chronological order may be for example that the udder quarters will be milked out approximately 1 minute (an other period of time is also possible, of course) after each other. In this way a robot arm can remove the teat cups one by one from the teats, or the teats can be post-treated one by one. When the udder quarters have been milked out at least substantially simultaneously, the teat cups can be removed from the teats simultaneously, so that the milking has a defined end time, which offers advantages.

The milking intensity can be controlled by varying in particular at least one milking process parameter chosen from the group consisting of: milking vacuum, rising rate of the pulsation vacuum, rate of descent of the pulsation vacuum and release-squeeze ratio. Varying such process parameters, although for other purposes, is known per se and needs not to be set out here in further detail.

The device 8 is further provided with at least one milking parameter meter 24, in the embodiment shown a thermometer, for determining, during milking, for each udder quarter a value of a milking parameter (for example the temperature) of the milk obtained. It is pointed out here that the location of the milking parameter meter 24 in the figure is purely schematically, and it will be obvious that it may also be disposed in other suitable places. The control device is in particular suitable for controlling the milking of each udder quarter by means of the milking vacuum unit or the pulsator unit at least partially with the aid of the determined value of the milking parameter (for example the temperature). When for example the temperature of the milk obtained demonstrates an unexpected increase, which could be an indication of for example a too high milking vacuum in the teat cup under the teat, the control device is capable of adjusting the milking intensity for the relevant teat in such a way that the temperature comes again within nominal values. Due to the fact that the milking intensity for the relevant udder quarter is adjusted during milking, the control unit also controls the milking intensities of the other udder quarters, so that the udder quarters will again be milked out according to the predetermined chronological order. Said control preferably takes place fully automatically, of course.

Besides the temperature, other milking parameters, such as fat content, protein content, milk flow, conductivity, colour and the like may be applied, of course.

The milking parameter meter is in particular a quarter milking duration meter known per se for determining the quarter milking duration per udder quarter. The device 8 is then provided with a calculating device for determining an expected quarter milking duration from historical quarter milking durations. The calculating device is in particular suitable for determining the average of the quarter milking duration of a previously adjustable number of milking runs (for example eight or ten, but any other number may be applied as well) of said udder quarter. It is thus possible to adjust, prior to the milking, the milking intensities per udder quarter on the basis of the expected quarter milking durations. It is in particular possible to control the functioning of the milking vacuum unit or the pulsator unit.

Therefore, when the measurement of a momentary milking parameter gives cause for it, it is possible to adjust the milking intensity during milking.

## Claims

1. A method of automatically milking an animal having at least two udder quarters, in which method the milking of the at least two udder quarters is performed at least partially simultaneously, the method comprising the step of controlling the milking intensity during at least a part of the milking of each udder quarter in such a way that all udder quarters will be milked out according to a predetermined chronological order, comprising the method the step of determining, during milking, for each udder quarter a value of a milking parameter of the milk obtained from the relevant udder quarter, **characterized in that** the milking intensity during at least a part of the milking of each udder quarter is controlled with the aid of the determined value of the milking parameter in such a way that all udder quarters will be milked out according to a predetermined chronological order.

2. A method as claimed in claim 1, **characterized in that** the method comprises the step of controlling the milking intensity during at least a part of the milking of each udder quarter with the aid of the determined value of the milking parameter in such a way that all udder quarters will be milked out at least substantially simultaneously.

3. A method as claimed in any one of the preceding claims, **characterized in that** the method comprises the step of automatically connecting a teat cup (1) to a teat by means of a robot arm.

4. A method as claimed in claim 3, **characterized in that** the teat cups (1) are connected successively to the teats.

5. A method as claimed in any one of the preceding claims, **characterized in that** for the milking intensity at least one milking process parameter is chosen from the group consisting of: milking vacuum, pulsation vacuum, and release-squeeze ratio.

6. A method as claimed in claim 5, **characterized in that** the method comprises the step of measuring, during the milking of an udder quarter, the milking vacuum under the teat in the teat cup (1), and the step of controlling the pulsation vacuum in such a way that the maximum underpressure value of the pulsation vacuum is equal to or is a fixed value lower than the measured milking vacuum.

7. A device (8) for automatically milking an animal having at least two udder quarters, which device (8) is provided with at least two teat cups (1) to be connected to the teat of a respective udder quarter, with a milking unit (9) for performing the milking of the udder quarters with a milking intensity that is determined by at least one milking process parameter with a determined value, and with a control device for controlling the milking intensity per udder quarter, the milking unit (9) being controllable by means of the control device in such a way that the milking of the udder quarters takes place at least partially simultaneously, the milking intensities per udder quarter being controllable by means of the control device during at least a part of the milking of each udder quarter in such a way that all udder quarters will be milked out according to a predetermined chronological order, the device (8) being provided with at least one milking parameter meter (24) for determining, during milking, per udder quarter a value of a milking parameter of the milk obtained from the relevant udder quarter, in that the milking parameter meter (24) can be connected to the control device for supplying to the control device data in relation to the value of the milking parameter, **characterized in that** the control device is suitable for controlling the milking intensity, with the aid of the determined value of the milking parameter, during at least a part of the milking of each udder quarter in such a way that all udder quarters will be milked out according to a predetermined chronological order.

8. A device (8) as claimed in claim 7, **characterized in that** by means of the control device the milking intensities per udder quarter during at least a part of the milking of each udder quarter can be controlled with the aid of the determined value of the milking parameter in such a way that all udder quarters will be milked out at least substantially simultaneously.

9. A device (8) as claimed in claim 7 or 8, **characterized in that** the device (8) is provided with a milking robot with a robot arm for automatically connecting a teat cup (1) to a teat.

10. A device (8) as claimed in claim 9, **characterized in that** the milking robot is suitable for connecting the individual teat cups (1).

11. A device (8) as claimed in any one of claims 7 to 10, **characterized in that** the device (8) comprises a milking vacuum meter (15) for measuring, during the milking of an udder quarter, the milking vacuum under the teat in the teat cup (1), and **in that** the device (8) comprises a control device for controlling the pulsation vacuum in such a way that the maximum underpressure value of the pulsation vacuum is equal to or is a fixed value lower than the measured milking vacuum.

## Patentansprüche

1. Verfahren zum automatischen Melken eines Tieres mit mindestens zwei Eutervierteln, wobei bei dem Verfahren das Melken der mindestens zwei Euterviertel zumindest teilweise gleichzeitig erfolgt, wobei das Verfahren den Verfahrensschritt des Steuerns der Melkintensität während zumindest eines Teiles des Melkens jedes Euterviertels umfaßt, so daß alle Euterviertel gemäß einer vorgegebenen zeitlichen Reihenfolge ausgemolken werden, wobei das Verfahren den Verfahrensschritt des Ermittelns während des Melkens für jedes Euterviertel eines Wertes eines Melkparameters der von dem betreffenden Euterviertel gewonnenen Milch umfaßt,
**dadurch gekennzeichnet, daß** die Melkintensität während zumindest eines Teiles des Melkens jedes Euterviertels mit Hilfe des ermittelten Wertes des Melkparameters in der Weise gesteuert wird, daß alle Euterviertel gemäß einer vorgegebenen zeitlichen Reihenfolge ausgemolken werden.

2. Verfahren nach Anspruch 1,
**dadurch gekennzeichnet, daß** das Verfahren den Verfahrensschritt des Steuerns der Melkintensität während zumindest eines Teiles des Melkens jedes Euterviertels mit Hilfe des ermittelten Wertes des Melkparameters umfaßt, so daß alle Euterviertel zumindest im wesentlichen gleichzeitig ausgemolken werden.

3. Verfahren nach einem der vorhergehenden Ansprüche,
**dadurch gekennzeichnet, daß** das Verfahren den Verfahrensschritt des automatischen Anschließens eines Zitzenbechers (1) an eine Zitze mittels eines Roboterarmes umfaßt.

4. Verfahren nach Anspruch 3,
**dadurch gekennzeichnet, daß** die Zitzenbecher (1) nacheinander an die Zitzen angeschlossen werden.

5. Verfahren nach einem der vorhergehenden Ansprüche,
**dadurch gekennzeichnet, daß** für die Melkintensität mindestens ein Melkparameter aus der Gruppe gewählt wird, die aus Melkvakuum, Pulsiervakuum und Entspannungs-Spannungs-Verhältnis besteht.

6. Verfahren nach Anspruch 5,
**dadurch gekennzeichnet, daß** das Verfahren den Verfahrensschritt des Messens während des Melkens eines Euterviertels des Melkvakuums unter der Zitze in dem Zitzenbecher (1) umfaßt sowie den Verfahrensschritt des Steuerns des Pulsiervakuums derart, daß der maximale Unterdruckwert des Pulsiervakuums gleich dem gemessenen Melkvakuum oder ein fester darunterliegender Wert ist.

7. Vorrichtung (8) zum automatischen Melken eines Tieres mit mindestens zwei Eutervierteln, wobei die Vorrichtung (8) mit mindestens zwei Zitzenbechern (1) versehen ist, die an die Zitze eines entsprechenden Euterviertels anzuschließen sind, mit einer Melkeinheit (9) zum Durchführen des Melkens der Euterviertel mit einer Melkintensität, die durch mindestens einen Melkparameter mit einem ermittelten Wert bestimmt wird, und mit einer Steuervorrichtung zum Steuern der Melkintensität für jedes Euterviertel, wobei die Melkeinheit (9) mittels der Steuervorrichtung derart steuerbar ist, daß das Melken der Euterviertel zumindest teilweise gleichzeitig erfolgt, wobei die Melkintensitäten für jedes Euterviertel mittels der Steuervorrichtung während zumindest eines Teiles des Melkens jedes Euterviertels derart steuerbar sind, daß alle Euterviertel gemäß einer vorgegebenen zeitlichen Reihenfolge ausgemolken werden, wobei die Vorrichtung (8) mit mindestens einem Melkparametermesser (24) versehen ist, um während des Melkens für jedes Euterviertel einen Wert eines Melkparameters der von dem betreffenden Euterviertel gewonnenen Milch zu ermitteln, wobei der Melkparametermesser (24) mit der Steuervorrichtung verbunden werden kann, um der Steuervorrichtung Daten bezüglich des Wertes des Melkparameters zuzuführen,
**dadurch gekennzeichnet, daß** die Steuervorrichtung geeignet ist, die Melkintensität mit Hilfe des ermittelten Wertes des Melkparameters während zumindest eines Teiles des Melkens jedes Euterviertels derart zu steuern, daß alle Euterviertel gemäß einer vorgegebenen zeitlichen Reihenfolge ausgemolken werden.

8. Vorrichtung (8) nach Anspruch 7,
**dadurch gekennzeichnet, daß** mittels der Steuervorrichtung die Melkintensitäten für jedes Euterviertel während zumindest eines Teiles des Melkens jedes Euterviertels mit Hilfe des ermittelten Wertes des Melkparameters in der Weise gesteuert werden können, daß alle Euterviertel zumindest im wesentlichen gleichzeitig ausgemolken werden.

9. Vorrichtung (8) nach Anspruch 7 oder 8,
**dadurch gekennzeichnet, daß** die Vorrichtung (8) einen Melkroboter mit einem Roboterarm zum automatischen Anschließen eines Zitzenbechers (1) an eine Zitze aufweist.

10. Vorrichtung (8) nach Anspruch 9,
**dadurch gekennzeichnet, daß** der Melkroboter geeignet ist, die einzelnen Zitzenbecher (1) anzuschließen.

11. Vorrichtung (8) nach einem der Ansprüche 7 bis 10,
**dadurch gekennzeichnet, daß** die Vorrichtung (8) einen Melkvakuummesser (15) umfaßt, um während des Melkens eines Euterviertels das Melkvakuum unter der Zitze in dem Zitzenbecher (1) zu messen, und daß die Vorrichtung (8) eine Steuervorrichtung umfaßt, um das Pulsiervakuum in der Weise zu steuern, daß der maximale Unterdruckwert des Pulsiervakuums gleich dem gemessenen Melkvakuum oder ein fester darunterliegender Wert ist.

## Revendications

1. Procédé de traite automatique d'un animal comportant au moins deux quartiers de pis, procédé dans lequel la traite des au moins deux quartiers de pis est réalisée au moins partiellement de manière simultanée, le procédé comprenant l'étape consistant à commander l'intensité de la traite pendant au moins une partie de la traite de chaque quartier de pis de telle sorte que tous les quartiers de pis soient traits suivant un ordre chronologique prédéterminé, le procédé comprenant l'étape consistant à déterminer, pendant la traite, pour chaque quartier de pis, une valeur d'un paramètre de traite du lait obtenu du quartier de pis correspondant, **caractérisé en ce que** l'intensité de la traite pendant au moins une partie de la traite de chaque quartier de pis est commandée à l'aide de la valeur déterminée du paramètre de traite de telle sorte que tous les quartiers de pis soient traits suivant un ordre chronologique prédéterminé.

2. Procédé selon la revendication 1, **caractérisé en ce que** le procédé comprend l'étape consistant à commander l'intensité de la traite pendant au moins une partie de la traite de chaque quartier de pis à l'aide de la valeur déterminée du paramètre de traite de telle sorte que tous les quartiers de pis soient traits de manière au moins sensiblement simultanée.

3. Procédé selon l'une quelconque des revendications précédentes, **caractérisé en ce que** le procédé comprend l'étape consistant à relier automatiquement un gobelet trayeur (1) à un trayon à l'aide d'un bras robotisé.

4. Procédé selon la revendication 3, **caractérisé en ce que** les gobelets trayeurs (1) sont reliés successivement aux trayons.

5. Procédé selon l'une quelconque des revendications précédentes, **caractérisé en ce que**, pour l'intensité de la traite, au moins un paramètre de processus de traite est choisi dans le groupe se composant des éléments suivants : un vide de traite, un vide par pulsation, et un rapport desserrement-serrement.

6. Procédé selon la revendication 5, **caractérisé en ce que** le procédé comprend l'étape consistant à mesurer, pendant la traite d'un quartier de pis, le vide de traite sous le trayon dans le gobelet trayeur (1), et l'étape consistant à commander le vide par pulsation de telle sorte que la valeur de sous-pression maximale du vide par pulsation soit égale à ou soit une valeur fixe inférieure au vide de traite mesuré.

7. Dispositif (8) de traite automatique d'un animal comportant au moins deux quartiers de pis, lequel dispositif (8) est muni d'au moins deux gobelets trayeurs (1) destinés à être reliés au trayon d'un quartier de pis respectif, une unité de traite (9) servant à réaliser la traite des quartiers de pis avec une intensité de traite qui est déterminée par au moins un paramètre du processus de traite avec une valeur déterminée, et un dispositif de commande servant à commander l'intensité de la traite pour chaque quartier de pis, l'unité de traite (9) pouvant être commandée par le dispositif de commande de telle sorte que la traite des quartiers de pis se fasse au moins partiellement de manière simultanée, les intensités de traite pour chaque quartier de pis pouvant être commandées à l'aide du dispositif de commande pendant au moins une partie de la traite de chaque quartier de pis de telle sorte que tous les quartiers de pis soient traits suivant un ordre chronologique prédéterminé, le dispositif (8) étant muni d'au moins un compteur de paramètre de traite (24) servant à déterminer, pendant la traite, pour chaque quartier de pis, une valeur d'un paramètre de traite du lait obtenu du quartier de pis correspondant, le compteur de paramètre de traite (24) pouvant être relié au dispositif de commande afin de fournir au dispositif de commande des données en rapport avec la valeur du paramètre de traite, **caractérisé en ce que** le dispositif de commande est approprié pour commander l'intensité de la traite, à l'aide de la valeur déterminée du paramètre de traite, pendant au moins une partie de la traite de chaque quartier de pis de telle sorte que tous les quartiers de pis soient traits suivant un ordre chronologique prédéterminé.

8. Dispositif (8) selon la revendication 7,
**caractérisé en ce que**, à l'aide du dispositif de commande, les intensités de la traite pour chaque quartier de pis pendant au moins une partie de la traite de chaque quartier de pis puissent être commandées à l'aide de la valeur déterminée du paramètre de traite de telle sorte que tous les quartiers de pis soient traits de manière au moins sensiblement simultanée.

9. Dispositif (8) selon la revendication 7 ou 8, **caractérisé en ce que** le dispositif (8) est muni d'un robot de traite avec un bras robotisé pour relier automatiquement un gobelet trayeur (1) à un trayon.

10. Dispositif (8) selon la revendication 9, **caractérisé en ce que** le robot de traite est approprié pour relier les gobelets trayeurs individuels (1).

11. Dispositif (8) selon l'une quelconque des revendications 7 à 10, **caractérisé en ce que** le dispositif (8) comprend une jauge de vide de traite (15) pour mesurer, pendant la traite d'un quartier de pis, le vide de traite sous le trayon dans le gobelet trayeur (1), et **en ce que** le dispositif (8) comprend un dispositif de commande servant à commander le vide par pulsation de telle sorte que la valeur de sous-pression maximale du vide par pulsation soit égale à ou soit une valeur fixe inférieure au vide de traite mesuré.
